# EUROPEAN PATENT SPECIFICATION

(11) **EP 3 273 007 B1**
(45) Date of publication and mention of the grant of the patent: **06.05.2020**
(21) Application number: 17182145.7
(22) Date of filing: 19.07.2017
(51) Int. Cl.: F01D 19/02, F01D 21/02, F02C 7/277

(54) **AIR SUPPLY CONTROL DURING MOTORING OF A GAS TURBINE ENGINE**
LUFTZUFUHRSTEUERUNG WÄHREND DEM ANTREIBEN EINES GASTURBINENMOTORS
COMMANDE D'ALIMENTATION D'AIR PENDANT LA MOTORISATION D'UN MOTEUR À TURBINE À GAZ

(30) Priority: 21.07.2016 US 201615216168
(43) Date of publication of application: 24.01.2018
(73) Proprietor: United Technologies Corporation, Farmington, CT 06032 (US)
(72) Inventor: CLAUSON, Jesse W., Agawam, MA Massachusetts 01001 (US); GELWAN, David, Glastonbury, CT Connecticut 06033 (US)
(74) Representative: Dehns

(56) References cited:
- EP-A2- 2 514 949
- WO-A1-2015/145034
- US-A- 3 812 378

## Description

### BACKGROUND

This disclosure relates to gas turbine engines, and more particularly to systems and methods for controlling an air supply during motoring of one or more gas turbine engines.

Gas turbine engines are used in numerous applications, one of which is for providing thrust to an airplane. When the gas turbine engine of an airplane has been shut off for example, after an airplane has landed at an airport, the engine is hot and due to heat rise, the upper portions of the engine will be hotter than lower portions of the engine. When this occurs thermal expansion may cause deflection of components of the engine which may result in a "bowed rotor" condition. If a gas turbine engine is in such a bowed rotor condition it is undesirable to restart or start the engine.

One approach to mitigating a bowed rotor condition is to use a starter system to drive rotation of a spool within the engine for an extended period of time at a speed below which a resonance occurs (i.e., a critical speed or frequency) that may lead to damage when a sufficiently large bowed rotor condition is present. However, if a failure occurs in the starter system prior to completing bowed rotor mitigation or if a speed control of the spool cannot reliably regulate spool speed, the spool may accelerate until the critical speed is reached, potentially causing damage.

WO2015/145034 A1 discloses a propulsion system of a multiple-engine helicopter having, in addition to running engines, a hybrid turboshaft engine that is capable of operating in a standby mode during stable flight. Information representative of the operation of the hybrid turboshaft engine is used to determine the flow of air to an air turbine that provides mechanical assistance.

EP 2514949 A2 discloses a turbine speed sensor coupled to an air turbine starter. A circuit is configured, upon receipt of the rotational speed signal, to determine whether the starter air valve is in a closed position or an open position.

### BRIEF DESCRIPTION

Viewed from one aspect the present invention provides a system for motoring a gas turbine engine of an aircraft according to claim 1.

In an embodiment, a system for motoring a gas turbine engine of an aircraft is provided. The system includes an air turbine starter, a starter air valve operable to deliver compressed air to the air turbine starter, and a controller. The controller is operable to control motoring of the gas turbine engine, detect a fault condition that prevents the controller from maintaining a motoring speed below a threshold level, and command a mitigation action that reduces delivery of the compressed air to the air turbine starter based on detection of the fault condition.

The fault condition includes a stuck open position of the starter air valve, or a pressure surge of the compressed air.

In addition to one or more of the features described above, or as an alternative to any of the foregoing embodiments, in further embodiments the compressed air may be driven by an auxiliary power unit of the aircraft.

In addition to one or more of the features described above, or as an alternative to any of the foregoing embodiments, in further embodiments the controller may relay the command for the mitigation action to the auxiliary power unit through an engine control interface using a digital communication bus.

In addition to one or more of the features described above, or as an alternative to any of the foregoing embodiments, in further embodiments the mitigation action may include opening one or more bleed valves to purge the compressed air.

In addition to one or more of the features described above, or as an alternative to any of the foregoing embodiments, in further embodiments the controller may receive state information of the one or more bleed valves through the engine control interface.

In addition to one or more of the features described above, or as an alternative to any of the foregoing embodiments, in further embodiments the mitigation action may include shutting one or more supply valves of the compressed air.

A further embodiment is a system of an aircraft that includes an auxiliary power unit operable to supply compressed air to the aircraft, an engine control interface operable to communicate with the auxiliary power unit on a digital communication bus, an air turbine starter operable to drive rotation of a starting spool of a gas turbine engine of the aircraft in response to the compressed air, a starter air valve operable to deliver the compressed air to the air turbine starter, and a controller. The controller is operable to control motoring of the starting spool by the air turbine starter, detect a fault condition that prevents the controller from maintaining a motoring speed below a threshold level, and send a command to the engine control interface to initiate a mitigation action that reduces delivery of the compressed air to the air turbine starter based on detection of the fault condition.

Viewed from another aspect the present invention provides a method for air supply control during motoring of a gas turbine engine according to claim 12.

In one embodiment a method for air supply control during motoring of a gas turbine engine is provided. The method includes commanding, by a controller, a starter air valve to control delivery of compressed air to an air turbine starter during motoring of the gas turbine engine and detecting a fault condition that prevents the controller from maintaining a motoring speed below a threshold level. A mitigation action is commanded that reduces delivery of the compressed air to the air turbine starter based on detecting the fault condition.

A technical effect of the apparatus, systems and methods is achieved by using a control sequence for bowed rotor mitigation of one or more gas turbine engines as described herein.

### BRIEF DESCRIPTION OF THE DRAWINGS

The subject matter which is regarded as the present disclosure is particularly pointed out and distinctly claimed in the claims at the conclusion of the specification. The foregoing and other features and advantages of the present disclosure are apparent from the following detailed description taken in conjunction with the accompanying drawings in which:
FIG. 1 is a schematic illustration of an aircraft engine starting system in accordance with an embodiment of the disclosure;
FIG. 2 is another schematic illustration of an aircraft engine starting system in accordance with an embodiment of the disclosure;
FIG. 3 is a schematic illustration of a high spool gas path with a straddle-mounted spool in accordance with an embodiment of the disclosure;
FIG. 4 is a schematic illustration of a high spool gas path with an overhung spool in accordance with an embodiment of the disclosure;
FIG. 5 is a block diagram of a system for bowed rotor start mitigation in accordance with an embodiment of the disclosure; and
FIG. 6 is a flow chart illustrating a method in accordance with an embodiment of the disclosure.

### DETAILED DESCRIPTION

Various embodiments of the present disclosure are related to a bowed rotor start mitigation system in a gas turbine engine. Embodiments can include using a starter air valve to control a rotor speed of a starting spool of the gas turbine engine to mitigate a bowed rotor condition using a dry motoring process. During dry motoring, the starter air valve can be actively adjusted to deliver air pressure (i.e., compressed air) from an air supply to an air turbine starter of an engine starting system that controls starting spool rotor speed. Dry motoring may be performed by running an engine starting system at a lower speed with a longer duration than typically used for engine starting while dynamically adjusting the starter air valve to maintain the rotor speed and/or follow a dry motoring profile. Some embodiments increase the rotor speed of the starting spool to approach a critical rotor speed gradually and as thermal distortion is decreased they then accelerate beyond the critical rotor speed to complete the engine starting process. The critical rotor speed refers to a major resonance speed where, if the temperatures are unhomogenized, the combination of a bowed rotor and similarly bowed casing and the resonance would lead to high amplitude oscillation in the rotor and high rubbing of blade tips on one side of the rotor, especially in the high pressure compressor if the rotor is straddle-mounted.

A dry motoring profile for dry motoring can be selected based on various parameters, such as a modelled temperature value of the gas turbine engine used to estimate heat stored in the engine core when a start sequence is initiated and identify a risk of a bowed rotor. The modelled temperature value alone or in combination with other values (e.g., measured temperatures) can be used to calculate a bowed rotor risk parameter. For example, the modelled temperature can be adjusted relative to an ambient temperature when calculating the bowed rotor risk parameter. The bowed rotor risk parameter may be used to take a control action to mitigate the risk of starting the gas turbine engine with a bowed rotor. The control action can include dry motoring consistent with the dry motoring profile. In some embodiments, a targeted rotor speed profile of the dry motoring profile can be adjusted as dry motoring is performed.

A full authority digital engine control (FADEC) system or other system may send a message to the cockpit to inform the crew of an extended time start time due to bowed rotor mitigation actions prior to completing an engine start sequence. If the engine is in a ground test or in a test stand, a message can be sent to the test stand or cockpit based on the control-calculated risk of a bowed rotor. A test stand crew can be alerted regarding a requirement to keep the starting spool of the engine to a speed below the known resonance speed of the rotor in order to homogenize the temperature of the rotor and the casings about the rotor which also are distorted by temperature non-uniformity.

In embodiments, a controller, such as a FADEC, can monitor for fault conditions that prevent the controller from maintaining a motoring speed below a threshold level (i.e., below the critical rotor speed) while performing dry motoring. The controller can command a mitigation action that reduces delivery of compressed air to the air turbine starter based on detection of the fault condition. For example, if a starter air valve is stuck open or a surge of starter air pressure results in difficulties controlling spool speed, the controller can take a mitigation action to ensure that the spool speed does not exceed the critical rotor speed before a bow rotor condition is sufficiently reduced or eliminated.

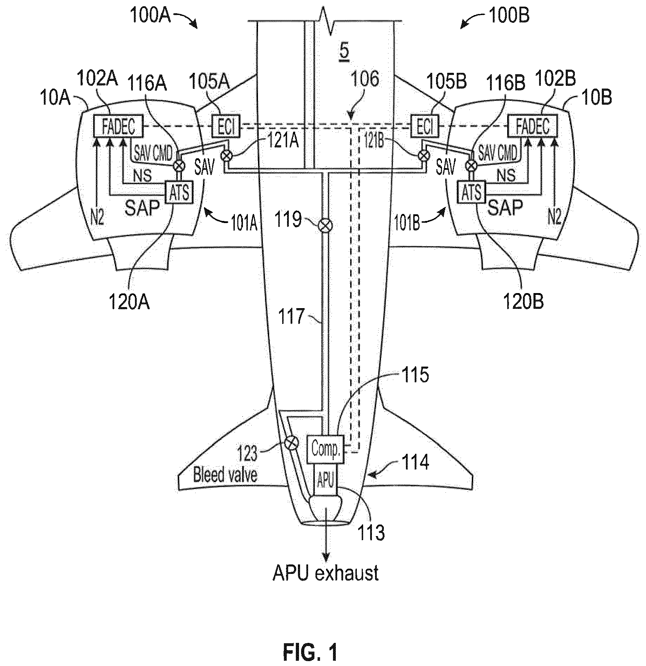

Referring now to FIG. 1, a schematic illustration of an aircraft 5 is depicted with a pair of engine systems 100A, 100B. Engine systems 100A, 100B include gas turbine engines 10A, 10B and engine starting systems 101A, 101B respectively. Engine systems 100A, 100B also include FADECs 102A, 102B to control gas turbine engines 10A, 10B and starting systems 101A, 101B. FADECs 102A, 102B may generally be referred to as controllers. FADECs 102A, 102B can communicate with respective engine control interfaces 105A, 105B using a digital communication bus 106. The engine control interfaces 105A, 105B can buffer engine system communication from aircraft level communication. Although depicted separately in FIG. 1, in some embodiments the engine control interfaces 105A, 105B are integrated with the FADECs 102A, 102B.

In an embodiment, the FADECs 102A, 102B and engine control interfaces 105A, 105B may each include memory to store instructions that are executed by one or more processors on one or more channels. The executable instructions may be stored or organized in any manner and at any level of abstraction, such as in connection with a controlling and/or monitoring operation of the gas turbine engines 10A, 10B of FIG. 1. The one or more processors can be any type of central processing unit (CPU), including a general purpose processor, a digital signal processor (DSP), a microcontroller, an application specific integrated circuit (ASIC), a field programmable gate array (FPGA), or the like. Also, in embodiments, the memory may include random access memory (RAM), read only memory (ROM), or other electronic, optical, magnetic, or any other computer readable medium onto which is stored data and control algorithms in a non-transitory form.

In the example of FIG. 1, an auxiliary power unit (APU) 113 and compressor 115 provide a compressed air source 114 to drive air turbine starters 120A, 120B of engine starting systems 101A, 101B. Compressed air from the compressed air source 114 is routed through ducts 117 and air starter valves 116A, 116B to the air turbine starters 120A, 120B. Various shutoff valves can also be included in ducts 117, such as a main shutoff valve 119 and engine shutoff valves 121A, 121B. One or more bleed valves 123 can be used to release compressed air from the ducts 117.

In embodiments, FADECs 102A, 102B can observe various engine parameters and starting system parameters to actively control dry motoring and prevent fault conditions from damaging the gas turbine engines 10A, 10B. For example, FADECs 102A, 102B can observe engine speeds (N2) of gas turbine engines 10A, 10B and may receive starter system parameters such as starter speeds (NS) and/or starter air pressures (SAP). When a fault condition such as a stuck open condition of one of the starter air valves 116A, 116B is detected, the corresponding FADEC 102A, 102B can send a command to a corresponding engine control interface 105A, 105B to initiate a mitigation action that reduces delivery of the compressed air to the corresponding air turbine starter 120A, 120B based on detection of the fault condition. For instance, if FADEC 102A commands starter air valve 116A closed but detects no decrease in engine speed N2, starter speed NS, and/or starter air pressure SAP, then the FADEC 102A can determine that a fault condition is present. To avoid the risk of continuing acceleration of engine speed N2 to the critical rotor speed in gas turbine engine 10A, FADEC 102A can command the engine control interface 105A to initiate a mitigation action. The mitigation action can include sending notification of the fault condition to the APU 113 to command opening of the one or more bleed valves 123. Alternatively, the mitigation action can include shutting one or more of the supply valves 119, 121A in this example.

In some cases, dry motoring can be performed simultaneously for engine systems 100A, 100B, where compressed air from the compressed air source 114 is provided to both air turbine starters 120A, 120B at the same time. When one of the engine systems 100A, 100B completes dry motoring before the other, a disturbance or pressure surge of compressed air may be experienced at the starter air valve 116A, 116B and air turbine starter 120A, 120B of the engine system 100A, 100B still performing dry motoring. If this sudden increase in pressure results in difficulties for the FADEC 102A, 102B maintaining a motoring speed below a threshold level (i.e., the critical rotor speed) for the engine system 100A, 100B still performing dry motoring, this may also be viewed as a fault condition resulting in commanding a mitigation action, such as temporarily opening one or more bleed valves 123 to reduce and/or slowly ramp compressed air pressure.

Although FIG. 1 depicts one example configuration, it will be understood that embodiments as described herein can cover a wide range of configurations, such as a four engine system. Further, the compressed air source 114 can include multiple sources other than APU 113 and compressor 115, such as a ground cart or cross engine bleed air. A mitigation action can be selected to correspond with the source of compressed air in response to detecting a fault condition.

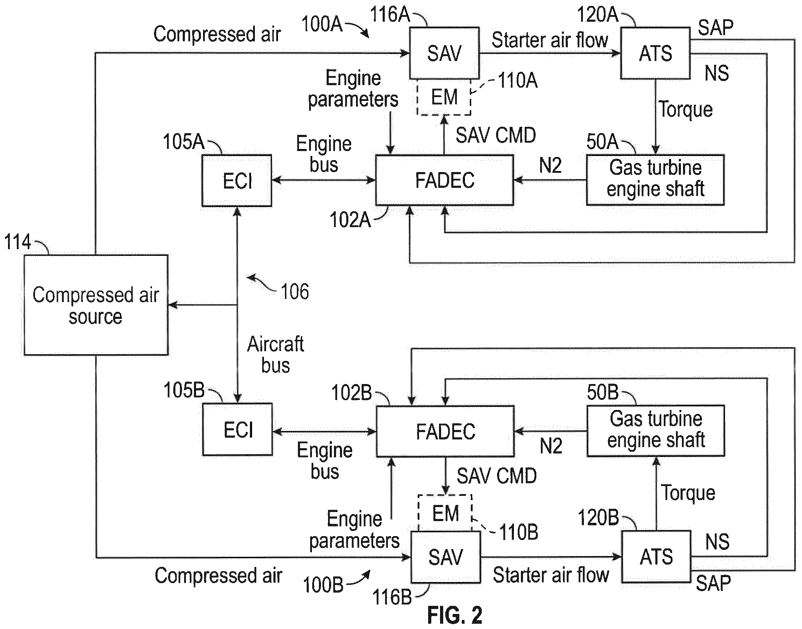

Turning now to FIG. 2, a schematic of engine systems 100A, 100B and engine starting systems 101A, 101B for the gas turbine engines 10A, 10B of FIG. 1 are depicted according to an embodiment. In the example of FIG. 2, the digital communication bus 106 can include an aircraft, engine, and/or test stand communication bus to interface with FADECs 102A, 102B, engine control interfaces 105A, 105B, aircraft controls, e.g., a cockpit, various onboard computer systems, and/or a test stand (not depicted). Either or both channels of FADECs 102A, 102B can alternate on and off commands to respective electromechanical devices 110A, 110B coupled to starter air valves 116A, 116B to achieve a partially open position of the starter air valves 116A, 116B to control a flow of compressed air from compressed air source 114 (e.g., APU 113 and compressor 115 of FIG. 1) as a starter air flow to air turbine starters 120A, 120B during dry motoring. The air turbine starters 120A, 120B output torque to drive rotation of respective gas turbine engine shafts 50A, 50B of starting spools of the gas turbine engines 10A, 10B.

The FADECs 102A, 102B can monitor engine speed (N2), starter speed (NS), starter air pressure (SAP), and/or other engine parameters to determine an engine operating state and to detect one or more fault conditions, such as a stuck open state of either of the starter air valves 116A, 116B. Thus, the FADECs 102A, 102B can each establish a control loop with respect to a motoring speed (N2 and/or NS) to adjust positioning of the starter air valves 116A, 116B. In some embodiments, the starter air valves 116A, 116B are discrete valves designed as on/off valves that are typically commanded to either fully opened or fully closed. However, there is a time lag to achieve the fully open position and the fully closed position. By selectively alternating an on-command time with an off-command time through the electromechanical devices 110A, 110B, intermediate positioning states (i.e., partially opened/closed) can be achieved. The FADECs 102A, 102B can modulate the on and off commands (e.g., as a duty cycle using pulse width modulation) to the electromechanical devices 110A, 110B to further open the starter air valves 116A, 116B and increase a rotational speed of the gas turbine engine shafts 50A, 50B. In an embodiment, the electromechanical devices 110A, 110B have a cycle time defined between an off-command to an on-command to the off-command that is at most half of a movement time for the starter air valves 116A, 116B to transition from fully closed to fully open. Pneumatic lines or mechanical linkage (not depicted) can be used to drive the starter air valves 116A, 116B between the open position and the closed position. The electromechanical devices 110A, 110B can each be a solenoid that positions the starter air valves 116A, 116B based on intermittently supplied electric power as commanded by the FADECs 102A, 102B. In an alternate embodiment, the electromechanical devices 110A, 110B are electric valves controlling muscle air to adjust the position of the starter air valves 116A, 116B as commanded by the FADECs 102A, 102B.

In an alternate embodiment, rather than using electromechanical devices 110A, 110B to achieve a partially open position of the starter air valves 116A, 116B, the starter air valves 116A, 116B can be variable position valves that are dynamically adjustable to selected valve angles by the FADECs 102A, 102B. When implemented as variable position valves, the starter air valves 116A, 116B can be continuous/infinitely adjustable and hold a commanded valve angle, which may be expressed in terms of a percentage open/closed and/or an angular value (e.g., degrees or radians). Performance parameters of the starter air valves 116A, 116B can be selected to meet dynamic response requirements. For example, in some embodiments, the starter air valves 116A, 116B each have a response rate of 0% to 100% open in less than 40 seconds. In other embodiments, the starter air valves 116A, 116B each have a response rate of 0% to 100% open in less than 30 seconds. In further embodiments, the starter air valves 116A, 116B each have a response rate of 0% to 100% open in less than 20 seconds.

In some embodiments, the FADECs 102A, 102B can each monitor a valve angle of the starter air valves 116A, 116B when valve angle feedback is available. The FADECs 102A, 102B can establish an outer control loop with respect to motoring speed and an inner control loop with respect to the valve angle of the starter air valves 116A, 116B.

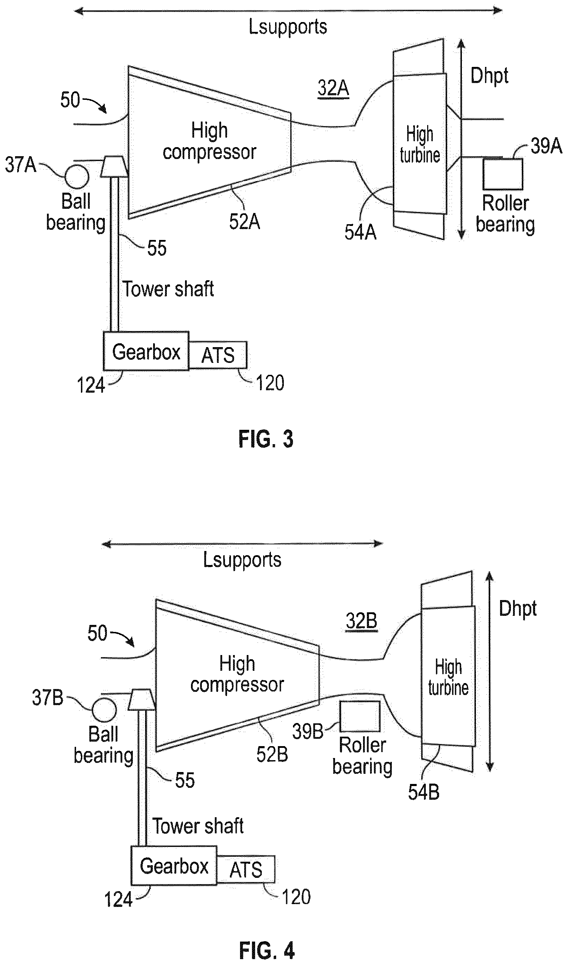

FIG. 3 and 4 depict two example engine configurations of the gas turbine engines 10A, 10B of FIG. 1. FIG. 3 is an example of a straddle-mounted spool 32A as a starting spool configuration. This configuration places two bearing compartments 37A and 39A (which may include a ball bearing and a roller bearing respectively), outside of the plane of most of the compressor disks of high pressure compressor 52A and at outside at least one of the turbine disks of high pressure turbine 54A. In contrast with a straddle-mounted spool arrangement, other embodiments may be implemented using an over-hung mounted spool 32B as depicted in FIG. 4 as a starting spool configuration. In over-hung mounted spool 32B, a bearing compartment 37B is located forward of the first turbine disk of high pressure turbine 54B such that the high pressure turbine 54B is overhung, and it is physically located aft of its main supporting structure. The use of straddle-mounted spools has advantages and disadvantages in the design of a gas turbine, but one characteristic of the straddle-mounted design is that the span between the bearing compartments 37A and 39A is long, making the amplitude of the high spot of a bowed rotor greater and the resonance speed that cannot be transited prior to temperature homogenization is lower. For any thrust rating, the straddle mounted arrangement, such as straddle-mounted spool 32A, gives Lsupport/Dhpt values that are higher, and the overhung mounted arrangement, such as overhung spool 32B, can be as much as 60% of the straddle-mounted Lsupport/Dhpt. Lsupport is the distance between bearings (e.g., between bearing compartments 37A and 39A or between bearing compartments 37B and 39B), and Dhpt is the diameter of the last blade of the high pressure turbine (e.g., high pressure turbine 54A or high pressure turbine 54B). As one example, a straddle-mounted engine starting spool, such as straddle-mounted spool 32A, with a roller bearing at bearing compartment 39A located aft of the high pressure turbine 54A may be more vulnerable to bowed rotor problems since the Lsupport/Dhpt ranges from 1.9 to 5.6.

FIGS. 3 and 4 also illustrate an air turbine starter 120 (e.g., air turbine starter 120A or 120B of FIGS. 1 and 2) interfacing through gearbox 124 via a tower shaft 55 with the straddle-mounted spool 32A proximate high compressor 52A and interfacing via tower shaft 55 with the overhung mounted spool 32B proximate high compressor 52B as part of a starting system. The straddle-mounted spool 32A and the over-hung mounted spool 32B are both examples of a starter spool having a gas turbine engine shaft 50 driven by the air turbine starter 120, such as gas turbine engine shafts 50A, 50B driven by air turbine starters 120A, 120B of FIG. 2.

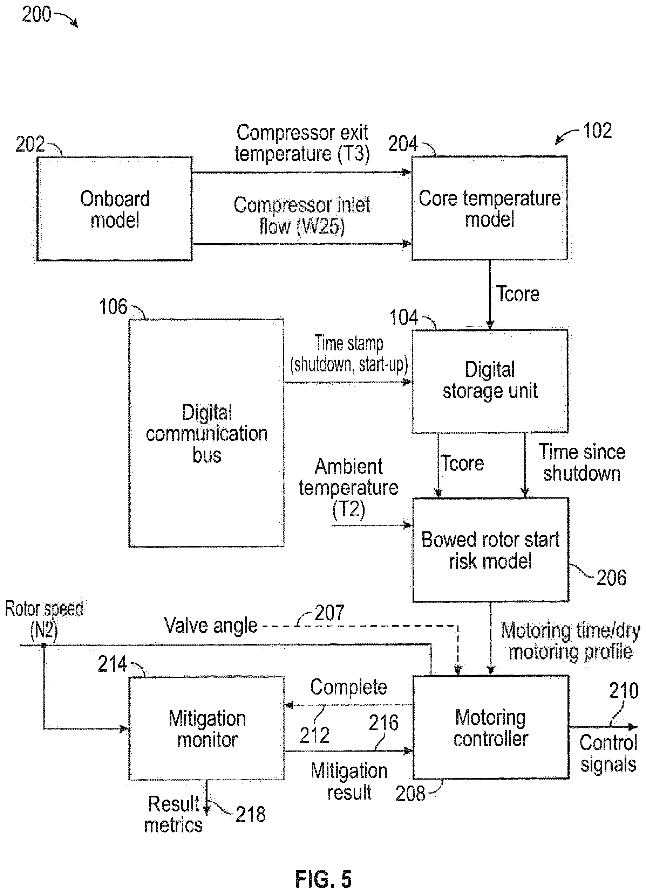

FIG. 5 is a block diagram of a system 200 for bowed rotor start mitigation that may control either of the starter air valves 116A, 116B of FIGS. 1 and 2 via control signals 210 in accordance with an embodiment. The system 200 may also be referred to as a bowed rotor start mitigation system. In the example of FIG. 5, the system 200 includes an onboard model 202 operable to produce a compressor exit temperature T₃ and a compressor inlet flow W₂₅ of one of the gas turbine engines 10A, 10B of FIG. 1 for use by a core temperature model 204. The onboard model 202 is configured to synthesize or predict major temperatures and pressures throughout one of the gas turbine engines 10A, 10B of FIG. 1 beyond those sensed by sensors positioned about the gas turbine engines 10A, 10B. The onboard model 202 and core temperature model 204 are examples of a first thermal model and a second thermal model that may be separately implemented or combined as part of a controller 102 (e.g., FADECs 102A, 102B of FIG. 1).

Engine parameter synthesis is performed by the onboard model 202, and the engine parameter synthesis may be performed using the technologies described in U.S. Patent Publication No. 2011/0077783. Of the many parameters synthesized by onboard model 202 at least two are outputted to the core temperature model 204, T₃, which is the compressor exit gas temperature of each gas turbine engine 10A, 10B and W₂₅, which is the air flow through the compressor. Each of these values are synthesized by onboard model 202 and inputted into the core temperature model 204 that synthesizes or provides a heat state (T_{core}) of each gas turbine engine 10A, 10B. T_{core} can be determined by a first order lag or function of T3 and a numerical value X (e.g., f(T₃, X)), wherein X is a value determined from a lookup table stored in memory of controller 102. Accordingly, X is dependent upon the synthesized value of W₂₅. In other words, W₂₅ when compared to a lookup table of the core temperature model 204 will determine a value X to be used in determining the heat state or T_{core} of each gas turbine engine 10A, 10B. In one embodiment, the higher the value of W₂₅ or the higher the flow rate through the compressor the lower the value of X.

The heat state of each engine 10A, 10B during use or T_{core} is determined or synthesized by the core temperature model 204 as each engine 10A, 10B is being run. In addition, T₃ and W₂₅ are determined or synthesized by the onboard model 202 and/or the controller 102 as each engine 10A, 10B is being operated.

At engine shutdown, the current or most recently determined heat state of the engine or T_{core} shutdown of an engine 10A, 10B is recorded into data storage unit (DSU) 104, and the time of the engine shutdown t_{shutdown} is recorded into the DSU 104. The DSU 104 retains data between shutdowns using non-volatile memory. Each engine 10A, 10B may have a separate DSU 104. Time values and other parameters may be received on digital communication bus 106. As long as electrical power is present for the controller 102 and DSU 104, additional values of temperature data may be monitored for comparison with modelled temperature data to validate one or more temperature models (e.g., onboard model 202 and/or core temperature model 204) of each gas turbine engine 10A, 10B.

During an engine start sequence or restart sequence, a bowed rotor start risk model 206 (also referred to as risk model 206) of the controller 102 is provided with the data stored in the DSU 104, namely T_{core} shutdown and the time of the engine shutdown t_{shutdown}. In addition, the bowed rotor start risk model 206 is also provided with the time of engine start tₛₜₐᵣₜ and the ambient temperature of the air provided to the inlet of each engine 10A, 10B Tᵢₙₗₑₜ or T₂. T₂ is a sensed value as opposed to the synthesized value of T₃.

The bowed rotor start risk model 206 maps core temperature model data with time data and ambient temperature data to establish a motoring time t_{motoring} as an estimated period of motoring to mitigate a bowed rotor of each gas turbine engine 10A, 10B. The motoring time t_{motoring} is indicative of a bowed rotor risk parameter computed by the bowed rotor start risk model 206. For example, a higher risk of a bowed rotor may result in a longer duration of dry motoring to reduce a temperature gradient prior to starting each gas turbine engine 10A, 10B of FIG. 1. In one embodiment, an engine start sequence may automatically include a modified start sequence; however, the duration of the modified start sequence prior to a normal start sequence will vary based upon the time period t_{motoring} that is calculated by the bowed rotor start risk model 206. The motoring time t_{motoring} for predetermined target speed N_{target} of each engine 10A, 10B is calculated as a function of T_{core} shutdown, t_{shutdown}, tₛₜₐᵣₜ and T₂, (e.g., f (T_{core shutdown}, t_{shutdown}, tₛₜₐᵣₜ and T2), while a target speed N_{target} is a predetermined speed that can be fixed or vary within a predetermined speed range of N_{targetMin} to N_{targetMax}. In other words, the target speed N_{target} may be the same regardless of the calculated time period tmotoring or may vary within the predetermined speed range of N_{targetMin} to N_{targetMax}. The target speed N_{target} may also be referred to as a dry motoring mode speed.

Based upon these values (T_{core} shutdown, t_{shutdown}, tₛₜₐᵣₜ and T₂) the motoring time t_{motoring} at a predetermined target speed N_{target} for the modified start sequence of each engine 10A, 10B is determined by the bowed rotor start risk model 206. Based upon the calculated time period t_{motoring} which is calculated as a time to run each engine 10A, 10B at a predetermined target speed N_{target} in order to clear a "bowed condition". In accordance with an embodiment of the disclosure, the controller 102 can run through a modified start sequence upon a start command given to each engine 10A, 10B by an operator of the engines 10A, 10B, such as a pilot of an airplane the engines 10A, 10B are used with. It is understood that the motoring time t_{motoring} of the modified start sequence may be in a range of 0 seconds to minutes, which depends on the values of T_{core shutdown}, t_{shutdown}, tₛₜₐᵣₜ and T₂.

In an alternate embodiment, the modified start sequence may only be run when the bowed rotor start risk model 206 has determined that the motoring time t_{motoring} is greater than zero seconds upon receipt of a start command given to each engine 10A, 10B. In this embodiment and if the bowed rotor start risk model 206 has determined that t_{motoring} is not greater than zero seconds, a normal start sequence will be initiated upon receipt of a start command to each engine 10A, 10B.

Accordingly and during an engine command start, the bowed rotor start risk model 206 of the system 200 may be referenced wherein the bowed rotor start risk model 206 correlates the elapsed time since the last engine shutdown time and the shutdown heat state of each engine 10A, 10B as well as the current start time tₛₜₐᵣₜ and the inlet air temperature T₂ in order to determine the duration of the modified start sequence wherein motoring of each engine 10A, 10B at a reduced speed N_{target} without fuel and ignition is required. As used herein, motoring of each engine 10A, 10B in a modified start sequence refers to the turning of a starting spool by air turbine starter 120A, 120B at a reduced speed N_{target} without introduction of fuel and an ignition source in order to cool the engine 10A, 10B to a point wherein a normal start sequence can be implemented without starting the engine 10A, 10B in a bowed rotor state. In other words, cool or ambient air is drawn into the engine 10A, 10B while motoring the engine 10A, 10B at a reduced speed in order to clear the "bowed rotor" condition, which is referred to as a dry motoring mode.

The bowed rotor start risk model 206 can output the motoring time t_{motoring} to a motoring controller 208. The motoring controller 208 uses a dynamic control calculation in order to determine a required valve position of the starter air valve 116A, 116B used to supply an air supply or compressed air source 114 to the engine 10A, 10B in order to limit the motoring speed of the engine 10A, 10B to the target speed N_{target} due to the position of the starter air valve 116A, 116B. The required valve position of the starter air valve 116A, 116B can be determined based upon an air supply pressure as well as other factors including but not limited to ambient air temperature, parasitic drag on the engine 10A, 10B from a variety of engine driven components such as electric generators and hydraulic pumps, and other variables such that the motoring controller 208 closes the loop for an engine motoring speed target N_{target} for the required amount of time based on the output of the bowed rotor start risk model 206. In one embodiment, the dynamic control of the valve position (e.g., open state of the valve (e.g., fully open, ½ open, ¼ open, etc.) in order to limit the motoring speed of the engine 10A, 10B) is controlled via duty cycle control (on/off timing using pulse width modulation) of electromechanical device 110A, 110B for starter air valves 116A, 116B.

When variable position starter air valves are used as the starter air valves 116A, 116B, a valve angle 207 can be provided to motoring control 208 based on valve angle feedback. A rotor speed N2 can be provided to the motoring controller 208 and a mitigation monitor 214, where motoring controller 208 and a mitigation monitor 214 may be part of controller 102.

The risk model 206 can determine a bowed rotor risk parameter that is based on the heat stored (T_{core}) using a mapping function or lookup table. When not implemented as a fixed rotor speed, the bowed rotor risk parameter can have an associated dry motoring profile defining a target rotor speed profile over an anticipated amount of time for the motoring controller 208 to send control signals 210, such as valve control signals for controlling starter air valves 116A, 116B of FIG. 3.

The bowed rotor risk parameter may be quantified according to a profile curve selected from a family of curves that align with observed aircraft/engine conditions that impact turbine bore temperature and the resulting bowed rotor risk. In some embodiments, an anticipated amount of dry motoring time can be used to determine a target rotor speed profile in a dry motoring profile for the currently observed conditions. As one example, one or more baseline characteristic curves for the target rotor speed profile can be defined in tables or according to functions that may be rescaled to align with the observed conditions.

In summary with reference to FIG. 5, as one example of an aircraft that includes systems as described herein, onboard model 202 and core temperature model 204 may run on controller 102 of the aircraft to track heat stored (T_{core}) in the turbine at the time of engine shutdown. Modelling of potential heat stored in the system may be performed as a turbine disk metal temperature model in the core temperature model 204. When the aircraft lands, engines typically operate at idle for a cool down period of time, e.g., while taxiing to a final destination. When an engine shutdown is detected, model state data can be logged by the DSU 104 prior to depowering. When the controller 102 powers on at a later time and model state data can be retrieved from the DSU 104, and the bowed rotor start risk model 206 can be updated to account for the elapsed time. When an engine start is requested, a bowed rotor risk can be assessed with respect to the bowed rotor start risk model 206. Extended dry motoring can be performed during an engine start process until the bow risk has sufficiently diminished.

In reference to FIG. 5, the mitigation monitor 214 can operate in response to receiving a complete indicator 212 to run a verification of the bowed rotor mitigation. The mitigation monitor 214 can provide mitigation results 216 to the motoring controller 208 and may provide result metrics 218 to other systems, such as a maintenance request or indicator. The mitigation monitor 214 may also run while dry motoring is active to determine whether adjustments to the dry motoring profile are needed. If the mitigation monitor 214 determines that a bowed rotor condition still exists, the motoring controller 208 may restart dry motoring, or a maintenance request or indicator can be triggered along with providing result metrics 218 for further analysis. Metrics of attempted bowed rotor mitigation can be recorded in the DSU 104 based on determining that the attempted bowed rotor mitigation was unsuccessful or incomplete.

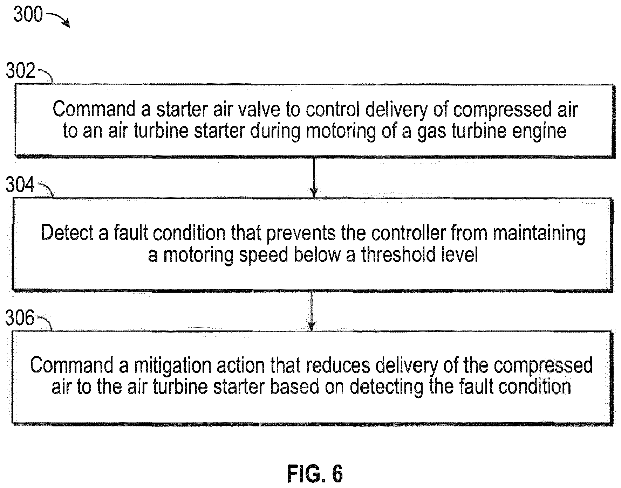

FIG. 6 is a flow chart illustrating a method 300 of air supply control during motoring of the gas turbine engines 10A, 10B of FIG. 1 in accordance with an embodiment. The method 300 of FIG. 6 is described in reference to FIGS. 1 to 5 and may be performed with an alternate order and include additional steps. Before initiating bowed rotor start mitigation, a bowed rotor determination step can be performed to estimate a need for bowed rotor start mitigation. Examples include the use of models and/or stored/observed engine/aircraft state data, such as data received from DSU 104, digital communication bus 106, and/or reading data from one or more temperature sensors of the gas turbine engines 10A, 10B.

At block 302, the controller 102 (e.g., FADEC 102A, 102B) commands a starter air valve (e.g., starter air valves 116A, 116B) to control delivery of compressed air to an air turbine starter (e.g., air turbine starters 120A, 120B) during motoring of either or both of the gas turbine engines 10A, 10B. At block 304, a fault condition is detected that prevents the controller 102 from maintaining a motoring speed (e.g., N2, NS) below a threshold level (e.g., critical rotor speed). At block 306, the controller 102 commands a mitigation action that reduces delivery of the compressed air to the air turbine starter 120A, 120B based on detecting the fault condition. The compressed air can be driven by an auxiliary power unit 113 of the aircraft 5, and the controller 102 can relay a command for the mitigation action to the auxiliary power unit 113 through an engine control interface 105A, 105B using a digital communication bus 106. The mitigation action can include opening one or more bleed valves 123 to purge the compressed air. The controller 102 may receive state information of the one or more bleed valves 123 through the engine control interface 105A, 105B. The mitigation action may alternatively or additionally include shutting one or more supply valves 119, 121A, 121B of the compressed air. The fault condition can include a stuck open position of the starter air valves 116A, 116B, a pressure surge of the compressed air, or other conditions requiring a reduction of motoring speed to avoid reaching the critical rotor speed prior to substantially eliminating the bowed rotor condition.

Accordingly and as mentioned above, it is desirable to detect, prevent and/or clear a "bowed rotor" condition in a gas turbine engine that may occur after the engine has been shut down. As described herein and in one non-limiting embodiment, the FADECs 102A, 102B (e.g., controller 102) may be programmed to automatically take the necessary measures in order to provide for a modified start sequence without pilot intervention other than the initial start request. In an exemplary embodiment, the FADECs 102A, 102B, DSU 104 and/or engine control interfaces 105A, 105B comprises a microprocessor, microcontroller or other equivalent processing device capable of executing commands of computer readable data or program for executing a control algorithm and/or algorithms that control the start sequence of the gas turbine engine. In order to perform the prescribed functions and desired processing, as well as the computations therefore (e.g., the execution of Fourier analysis algorithm(s), the control processes prescribed herein, and the like), the FADECs 102A, 102B, DSU 104 and/or engine control interfaces 105A, 105B may include, but not be limited to, a processor(s), computer(s), memory, storage, register(s), timing, interrupt(s), communication interfaces, and input/output signal interfaces, as well as combinations comprising at least one of the foregoing. For example, the FADECs 102A, 102B, DSU 104 and/or engine control interfaces 105A, 105B may include input signal filtering to enable accurate sampling and conversion or acquisitions of such signals from communications interfaces. As described above, exemplary embodiments of the disclosure can be implemented through computer-implemented processes and apparatuses for practicing those processes.

While the present disclosure has been described in detail in connection with only a limited number of embodiments, it should be readily understood that the present disclosure is not limited to such disclosed embodiments. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system for motoring a gas turbine engine of an aircraft, the system comprising:
an air turbine starter (120) operable to drive rotation of a starting spool (32) of a gas turbine engine of the aircraft in response to compressed air;
a starter air valve (116) operable to control delivery of the compressed air to the air turbine starter (120); and
a controller (102) operable to control motoring of the starting spool (32) of the gas turbine engine by controlling a state of the starter air valve (116), detect a fault condition that prevents the controller (102) from maintaining a motoring speed below a threshold level, and command a mitigation action that reduces delivery of the compressed air to the air turbine starter (120) based on detection of the fault condition, wherein the fault condition comprises a stuck open position of the starter air valve (116) or a pressure surge of the compressed air.

2. The system as in claim 1, wherein the compressed air is driven by an auxiliary power unit (113) of the aircraft.

3. The system as in claim 2, wherein the controller (102) relays the command for the mitigation action to the auxiliary power unit (113) through an engine control interface (105) using a digital communication bus (106), wherein the mitigation action preferably comprises opening one or more bleed valves (123) to purge the compressed air, and the controller (102) more preferably receives state information of the one or more bleed valves (123) through the engine control interface (105).

4. The system as in any preceding claim, wherein the mitigation action comprises shutting one or more supply valves (119, 121) of the compressed air.

5. The system as in claim 1 comprising:
an auxiliary power unit (113) operable to supply compressed air to the aircraft;
an engine control interface (105) operable to communicate with the auxiliary power unit (113) on a digital communication bus (106); and
wherein the controller (102) is operable to send a command to the engine control interface (105) to initiate the mitigation action.

6. The system of claim 5 wherein the mitigation action comprises opening one or more bleed valves (123) to purge the compressed air, and wherein the controller (102) preferably receives state information of the one or more bleed valves (123) through the engine control interface (105).

7. The system of claim 5 or claim 6, wherein the mitigation action comprises shutting one or more supply valves (119, 121) of the compressed air,

8. A method for air supply control during motoring of a gas turbine engine, the method comprising:
commanding, by a controller (102), a starter air valve (116) to control delivery of compressed air to an air turbine starter (120) during motoring of the gas turbine engine, wherein the air turbine starter (120) drives rotation of a starting spool (32) of the gas turbine engine in response to the compressed air;
detecting a fault condition that prevents the controller (102) from maintaining a motoring speed below a threshold level, wherein the fault condition comprises a stuck open position of the starter air valve (116) or a pressure surge of the compressed air; and
commanding a mitigation action that reduces delivery of the compressed air to the air turbine starter (120) based on detecting the fault condition.

9. The method as in claim 8, wherein the compressed air is driven by an auxiliary power unit (113) of the aircraft and the controller (102) relays a command for the mitigation action to the auxiliary power unit (113) through an engine control interface (105) using a digital communication bus (106), wherein the mitigation action preferably comprises opening one or more bleed valves (123) to purge the compressed air, and wherein the method preferably further comprises receiving, by the controller (102), state information of the one or more bleed valves (123) through the engine control interface (105).

10. The method as in claim 8 or claim 9, wherein the mitigation action comprises shutting one or more supply valves (119, 121) of the compressed air.

## Patentansprüche

1. System zum Anlassen eines Gasturbinentriebwerks eines Luftfahrzeugs, wobei das System Folgendes umfasst:
einen Luftturbinenstarter (120), der dazu betreibbar ist, eine Drehung einer Startspule (32) eines Gasturbinentriebwerks des Luftfahrzeugs als Reaktion auf verdichtete Luft anzutreiben;
ein Starterluftventil (116), das betreibbar ist, um ein Liefern der verdichteten Luft zu dem Luftturbinenstarter (120) zu steuern; und
eine Steuerung (102), die dazu betreibbar ist, ein Anlassen der Startspule (32) des Gasturbinentriebwerks durch Steuern eines Status des Starterluftventils (116) zu steuern, einen Fehlerzustand zu detektieren, der verhindert, dass die Steuerung (102) eine Anlassgeschwindigkeit unter einem Schwellenwert hält, und eine Minderungsmaßnahme zu befehlen, die ein Liefern der verdichteten Luft zu dem Luftturbinenstarter (120) basierend auf einem Detektieren des Fehlerzustands reduziert, wobei der Fehlerzustand eine blockierte geöffnete Position des Starterluftventils (116) oder einen Druckstoß der verdichteten Luft umfasst.

2. System nach Anspruch 1, wobei die verdichtete Luft durch ein Hilfstriebwerk (113) des Luftfahrzeugs angetrieben wird.

3. System nach Anspruch 2, wobei die Steuerung (102) den Befehl für die Minderungsmaßnahme an das Hilfstriebwerk (113) durch eine Triebwerksteuerschnittstelle (105) mithilfe eines digitalen Kommunikationsbusses (106) weiterleitet, wobei die Minderungsmaßnahme bevorzugt ein Öffnen einer oder mehrerer Entlüftungsventile (123) umfasst, um die verdichtete Luft abzusaugen, und wobei die Steuerung (102) noch bevorzugter Statusinformationen des einen oder der mehreren Entlüftungsventile (123) durch die Triebwerksteuerschnittstelle (105) empfängt.

4. System nach einem der vorstehenden Ansprüche, wobei die Minderungsmaßnahme ein Schließen eines oder mehrerer Zufuhrventile (119, 121) der verdichteten Luft umfasst.

5. System nach Anspruch 1, Folgendes umfassend:
ein Hilfstriebwerk (113), das dazu betreibbar ist, dem Luftfahrzeug verdichtete Luft zuzuführen;
eine Triebwerksteuerschnittstelle (105), die dazu betreibbar ist, auf einem digitalen Kommunikationsbus (106) mit dem Hilfstriebwerk (113) zu kommunizieren; und
wobei die Steuerung (102) dazu betreibbar ist, einen Befehl an die Triebwerksteuerschnittstelle (105) zu senden, um die Minderungsmaßnahme zu initiieren.

6. System nach Anspruch 5, wobei die Minderungsmaßnahme ein Öffnen eines oder mehrerer Entlüftungsventile (123) umfasst, um die verdichtete Luft abzusaugen, und wobei die Steuerung (102) bevorzugt Statusinformationen des einen oder der mehreren Entlüftungsventile (123) durch die Triebwerksteuerschnittstelle (105) empfängt.

7. System nach Anspruch 5 oder 6, wobei die Minderungsmaßnahme ein Schließen eines oder mehrerer Zufuhrventile (119, 121) der verdichteten Luft umfasst.

8. Verfahren zur Luftzufuhrsteuerung während dem Anlassen eines Gasturbinentriebwerks, wobei das Verfahren Folgendes umfasst:
Befehlen eines Starterluftventils (116) durch eine Steuerung (102), ein Liefern von verdichteter Luft an einen Luftturbinenstarter (120) während dem Anlassen des Gasturbinentriebwerks zu steuern, wobei der Luftturbinenstarter (120) eine Drehung einer Startspule (32) des Gasturbinentriebwerks als Reaktion auf die verdichtete Luft antreibt;
Detektieren eines Fehlerzustands, der verhindert, dass die Steuerung (102) eine Anlassgeschwindigkeit unter einem Schwellenwert hält, wobei der Fehlerzustand eine blockierte geöffnete Position des Starterluftventils (116) oder einen Druckstoß der verdichteten Luft umfasst; und
Befehlen einer Minderungsmaßnahme, die ein Liefern der verdichteten Luft an den Luftturbinenstarter (120) basierend auf einem Detektieren des Fehlerzustands reduziert.

9. Verfahren nach Anspruch 8, wobei die verdichtete Luft von einem Hilfstriebwerk (113) des Luftfahrzeugs angetrieben wird und wobei die Steuerung (102) einen Befehl für die Minderungsmaßnahme an das Hilfstriebwerk (113) durch eine Triebwerksteuerschnittstelle (105) mithilfe eines digitalen Kommunikationsbusses (106) weiterleitet, wobei die Minderungsmaßnahme bevorzugt ein Öffnen einer oder mehrerer Entlüftungsventile (123) umfasst, um die verdichtete Luft abzusaugen, und wobei das Verfahren bevorzugt ferner ein Empfangen von Statusinformationen des einen oder der mehreren Entlüftungsventile (123) von der Steuerung (102) durch die Triebwerksteuerschnittstelle (105) empfängt.

10. Verfahren nach Anspruch 8 oder 9, wobei die Minderungsmaßnahme ein Schließen eines oder mehrerer Zufuhrventile (119, 121) der verdichteten Luft umfasst.

## Revendications

1. Système permettant de motoriser un moteur à turbine à gaz d'un aéronef, le système comprenant :
un démarreur de turbine à air (120) servant à entraîner une rotation d'une bobine de démarrage (32) d'un moteur à turbine à gaz de l'aéronef en réponse à de l'air comprimé ;
une valve d'air de démarreur (116) servant à commander une distribution de l'air comprimé au démarreur de turbine à air (120) ; et
un dispositif de commande (102) servant à commander une motorisation de la bobine de démarrage (32) du moteur à turbine à gaz en commandant un état de la valve d'air de démarreur (116), détecter une condition de défaillance qui empêche le dispositif de commande (102) de maintenir une vitesse de motorisation en dessous d'un niveau de seuil, et ordonner une action d'atténuation qui réduit une distribution de l'air comprimé au démarreur de turbine à air (120) sur la base de la détection de la condition de défaillance, dans lequel la condition de défaillance comprend une position bloquée ouverte de la valve d'air de démarreur (116) ou une saute de pression de l'air comprimé.

2. Système selon la revendication 1, dans lequel l'air comprimé est entraîné par une unité de puissance auxiliaire (113) de l'aéronef.

3. Système selon la revendication 2, dans lequel le dispositif de commande (102) relaie l'ordre pour l'action d'atténuation à l'unité de puissance auxiliaire (113) par le biais d'une interface de commande de moteur (105) en utilisant un bus de communication numérique (106), dans lequel l'action d'atténuation comprend de préférence l'ouverture d'une ou plusieurs valves d'évacuation (123) pour purger l'air comprimé, et le dispositif de commande (102) reçoit de manière davantage préférée des informations d'état des une ou plusieurs valves d'évacuation (123) par le biais de l'interface de commande de moteur (105).

4. Système selon une quelconque revendication précédente, dans lequel l'action d'atténuation comprend la fermeture d'une ou plusieurs valves d'alimentation (119, 121) de l'air comprimé.

5. Système selon la revendication 1 comprenant :
une unité de puissance auxiliaire (113) servant à alimenter en air comprimé l'aéronef ;
une interface de commande de moteur (105) servant à communiquer avec l'unité de puissance auxiliaire (113) sur un bus de communication numérique (106) ; et
dans lequel le dispositif de commande (102) sert à envoyer un ordre à l'interface de commande de moteur (105) pour amorcer l'action d'atténuation.

6. Système selon la revendication 5, dans lequel l'action d'atténuation comprend l'ouverture d'une ou plusieurs valves d'évacuation (123) pour purger l'air comprimé, et dans lequel le dispositif de commande (102) reçoit de préférence des informations d'état des une ou plusieurs valves d'évacuation (123) par le biais de l'interface de commande de moteur (105).

7. Système selon la revendication 5 ou la revendication 6, dans lequel l'action d'atténuation comprend la fermeture d'une ou plusieurs valves d'alimentation (119, 121) de l'air comprimé.

8. Procédé pour une commande d'alimentation d'air pendant la motorisation d'un moteur à turbine à gaz, le procédé comprenant :
le fait d'ordonner, par un dispositif de commande (102), à une valve d'air de démarreur (116) de commander une distribution d'air comprimé à un démarreur de turbine à air (120) pendant la motorisation du moteur à turbine à gaz, dans lequel le démarreur de turbine à air (120) entraîne une rotation d'une bobine de démarrage (32) du moteur à turbine à gaz en réponse à l'air comprimé ;
la détection d'une condition de défaillance qui empêche le dispositif de commande (102) de maintenir une vitesse de motorisation en dessous d'un niveau de seuil, dans lequel la condition de défaillance comprend une position bloquée ouverte de la valve d'air de démarreur (116) ou une saute de pression de l'air comprimé ; et
le fait d'ordonner une action d'atténuation qui réduit une distribution de l'air comprimé au démarreur de turbine à air (120) sur la base de la détection de la condition de défaillance.

9. Procédé selon la revendication 8, dans lequel l'air comprimé est entraîné par une unité de puissance auxiliaire (113) de l'aéronef et le dispositif de commande (102) relaie un ordre pour l'action d'atténuation à l'unité de puissance auxiliaire (113) par le biais d'une interface de commande de moteur (105) en utilisant un bus de communication numérique (106), dans lequel l'action d'atténuation comprend de préférence l'ouverture d'une ou plusieurs valves d'évacuation (123) pour purger l'air comprimé, et dans lequel le procédé comprend en outre de préférence la réception, par le dispositif de commande (102), d'informations d'état des une ou plusieurs valves d'évacuation (123) par le biais de l'interface de commande de moteur (105).

10. Procédé selon la revendication 8 ou la revendication 9, dans lequel l'action d'atténuation comprend la fermeture d'une ou plusieurs valves d'alimentation (119, 121) de l'air comprimé.
